# EUROPEAN PATENT SPECIFICATION

(11) **EP 0 957 003 B1**
(45) Date of publication and mention of the grant of the patent: **05.03.2003**
(21) Application number: 99302219.3
(22) Date of filing: 23.03.1999
(51) Int. Cl.: B60R 11/02

(54) **Bezel assembly for an electronic device**
Anzeigtafel für eine elektronische Einheit
Facade de commande pour équipement électronique

(30) Priority: 14.04.1998 GB 9807699
(43) Date of publication of application: 17.11.1999
(73) Proprietor: FORD MOTOR COMPANY LIMITED, Brentwood, Essex CM13 3BW (GB); FORD-WERKE AKTIENGESELLSCHAFT, 50735 Köln (DE); Groupe Ford France S.A., 92506 Rueil Malmaison Cedex (FR)
(72) Inventor: Shepherd, Mark Robert, Basildon, Essex SS15 4JP (GB); Garnham, Adrian, Benfleet, Essex SS3 4LF (GB)
(74) Representative: Messulam, Alec Moses

(56) References cited:
- EP-A- 0 647 949
- US-A- 4 947 457
- US-A- 5 097 392
- US-A- 5 312 263
- US-A- 5 610 376

## Description

The present invention relates to a bezel assembly and to an electronic device such as a motor vehicle cassette radio, that has a demountable bezel portion and a button and/or display carrier, and in particular to a latch mechanism of unitary construction with the carrier for releasing the demountable bezel portion.

For reasons of security against theft or misuse, it is often desirable for the bezel to have a demountable portion that may be removed by the user so that the functionality of the device is disabled until the user reattaches the demountable bezel portion to the device. In one known arrangement, the bezel has a fixed portion with a recess and a separate latching mechanism adapted to releasably secure the demountable bezel within the recess.

It is conventional if the latching mechanism comprises a number of components, for example a discrete clip that extends through an aperture in a wall of the recess and biased from behind by a leaf spring in a direction towards the demountable bezel. The demountable bezel then has a retention feature with which the clip engages to hold the demountable bezel. Normally, the arrangement is such that the retention feature snaps into engagement with the clip when the demountable bezel is press fitted into the recess. A separate mechanism is then provided by which the clip can be retracted in order to release the demountable bezel. The recess normally has a spring mechanism to facilitate the removal of the demountable bezel when released. The latching mechanism is conventionally held in a fixed relationship with the bezel, for example being secured directly to the bezel fixed portion itself.

In many electronic devices, for example an audio device such as a motor vehicle cassette radio, it is necessary to provide one or more user operable buttons or a display, surrounded by apertures in the bezel. In one conventional arrangement, these buttons and/or displays are held on one or more frames or carriers that are affixed to an inner surface of the bezel.

It is therefore conventional for there to be a number of components to be affixed or held in a fixed relationship to the bezel, relating to the buttons and/or display, and also the latching mechanism for the demountable bezel.

The need to provide and assemble a number of components adds to the manufacturing cost of an electronic device having a demountable bezel, as compared with a similar device not having a demountable bezel.

It is an object of the invention to provide a more convenient and economical arrangement for an electronic device having a demountable bezel.

According to the invention, there is provided a bezel assembly comprising a bezel and a button and/or display carrier, the bezel having a fixed portion and a demountable portion, the carrier being affixed to the fixed bezel portion, and the fixed bezel portion having a recess in a front face thereof in which the demountable bezel portion may be releasably secured, in which the carrier has a latch mechanism by which the demountable bezel portion is releasably secured within the recess (known from EP-A-0 647 949), characterised in that the latch mechanism is of unitary construction with the carrier.

The latch mechanism is therefore maintained in a known relationship with the fixed bezel portion, and therefore also the demountable bezel portion, by virtue of being an integral part of the component forming the carrier.

By forming the carrier and the latch mechanism by a component of unitary construction, it is also possible to reduce the number of discrete components necessary to form the latch mechanism, and the number of process steps necessary to manufacture an electronic device having a demountable bezel, such as an audio device for a motor vehicle.

The latch mechanism may have a latching engagement feature by which the demountable bezel portion is releasably secured within the recess, and a flexure means by which the engagement feature may be moved to release the demountable bezel portion. The flexure means may then bias the engagement feature into positive engagement with the demountable bezel portion when the demountable bezel portion is secured within the recess. Since these features may be provided in a unitary construction, for example by moulding in a suitable plastics material, it is not necessary for there to be separate components, such as a discrete clip and leaf spring.

In a preferred embodiment of the invention, the latch mechanism has a lever arm which extends through the bezel, for example through an aperture in the bezel. When the arm is manually moved, this then moves the flexure means and hence the engagement feature to release the demountable bezel portion.

One way to provide a flexure means of unitary construction with the carrier and the rest of the latch mechanism, is if the flexure means comprises one or more flexible arms extending from a relatively inflexible body portion of the carrier. Preferably, there is a pair of parallel arms, spaced laterally and directly apart. The relative flexibility of the arm or arms then derives from the relatively reduced cross sectional area of the arm or arms with respect to the adjoining body portion of the carrier.

The engagement feature may be a detent that engages with a matching part of the demountable bezel portion to secure the demountable bezel portion within the recess. The latch mechanism may then include a detent mount extending generally at right angles from the ends of the arms, the detent then extending from the mount in a direction generally parallel to the pair of arms. In preferred embodiment, the detent extends generally in a direction opposite to the extension of the arms leading from the carrier body portion, although the arrangement could be such that the detent extends generally in the same direction as the arms.

The mount should be relatively inflexible compared with the arms, so that it provides a good mechanical support for the detent, and prevents the demountable bezel from being inadvertently released. When there is a pair of parallel arms, the mount preferably extends generally at right angles across the arms to join these at their ends. The relative rigidity of the mount then helps to constrain the movement of the arms, and hence the detent, to rotation about an axis that is at right angles to the length of the arms in the vicinity of the junction between the arms and the carrier body portion.

In a preferred embodiment, the lever arm by which the latch mechanism is activated extends from the mount and through the fixed bezel portion, for example through an aperture in the bezel portion. The mount and hence the detent may be then moved to release the demountable bezel portion.

In order to aid assembly and reduce the need for high manufacturing tolerance, particularly with injection moulded plastics components, the carrier body portion may have a first locating feature that locates with a matching second locating feature on the bezel fixed portion. The carrier and hence latching mechanism may then be more accurately located with respect to the bezel fixed portion when the carrier is affixed to the bezel.

The first locating feature is preferably on a part of the carrier body portion proximate the latching mechanism so that variations in dimensions of the carrier and latch have the least effect on the positioning of the latch mechanism with respect to both the bezel fixed and demountable portions. In a preferred embodiment of the invention, the first locating feature is on a part of the carrier body portion centered between two of the flexible arms.

The first locating feature may be a hole in the carrier body portion, the hole having a tapering inner surface. The second locating feature is then a projection that fits into the hole and that has a matching taper. The carrier and bezel may, of course have other conventional locating features which act in concert with the first and second locating features, such as aligned clearance and tapped holes by which the carrier may be screwed to the bezel fixed portion. The carrier and bezel fixed portion are then automatically aligned in the region of the latching mechanism as these matching tapered surfaces are brought together when the carrier is affixed to the bezel fixed portion.

The first and second location features may also serve as a point at which the carrier and bezel fixed portion are held together, for example by a screw with a shank that screws into the projection and that has a head that contacts and holds the carrier to the bezel around the hole of the first location feature, thereby pressing the matching tapering surfaces together.

The invention will now be further described by way of example with reference to the accompanying drawings, in which:
Figure 1 is a front view of a radio cassette audio device for use in a motor vehicle passenger compartment, showing fixed and removable bezel portions and in outline an integrally moulded button and display carrier and bezel latch mechanism according to the invention;
Figure 2 is a perspective view of the carrier and latch mechanism of Figure 1;
Figure 3 is a cross-section view through the carrier of Figure 2, taken through line III-III showing the latch mechanism in side view;
Figure 4 is an enlarged plan view of the carrier and latch mechanism;
Figure 5 is a cross section view through the carrier and latch mechanism, taken through line V-V of Figure 4; and
Figure 6 is a bottom view of the carrier and latch mechanism, taken along line VI-VI of Figure 4.

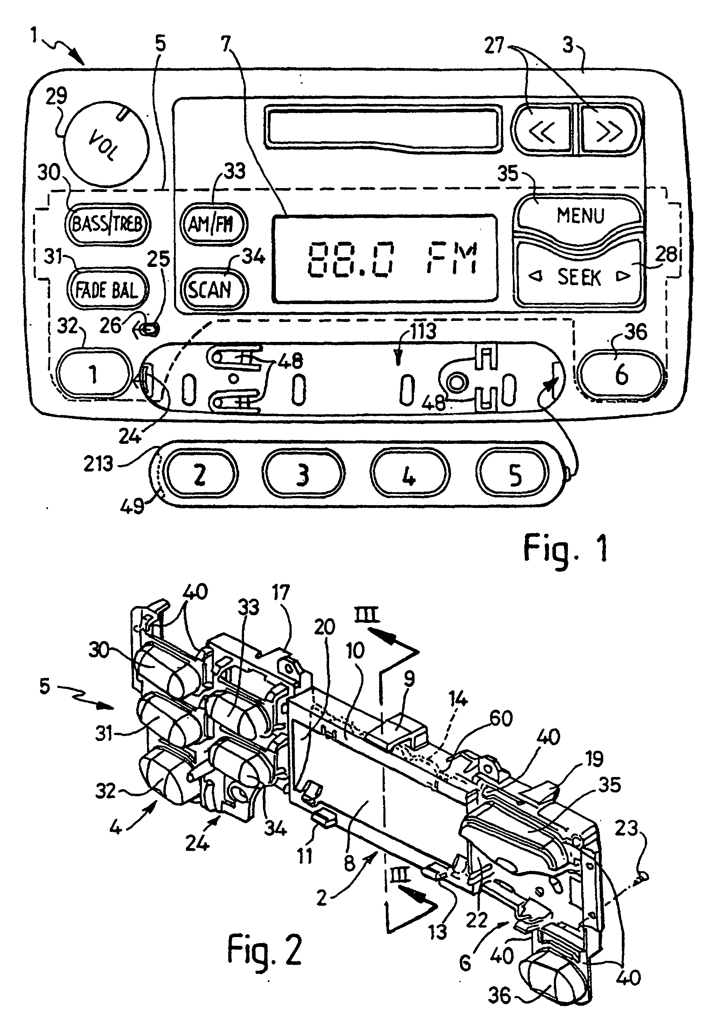

Figure 1 illustrates a bezel assembly 1 of a cassette radio audio device for use in a motor vehicle passenger compartment. The bezel assembly has a fixed front panel or bezel 3 provided with various holes for a liquid crystal display 7, and control buttons 27-36. For reasons of security against theft, a portion 213 of the bezel is seated within a recess 113 in the fixed bezel portion 3, and is demountable upon activation of a latch mechanism 24 via a lever arm 25 that protrudes through a small hole 26 in the bezel fixed portion 3.

Although not shown, the bezel assembly 1 snaps onto the cassette radio frame in a known manner.

Referring now also to Figure 2, a button and display carrier 5 of unitary construction that supports and is integrally moulded with several of the buttons 30-36, and that supports the display 7, is held by self tapping screws 23 to the inside back surface of the bezel fixed portion 3. The carrier 5 has a generally rectangular form with a central display backlight portion 2 and two button portions 4,6 arranged on opposite sides of the display portion 2. The carrier has three clips 9,11,13 extending forwards of the carrier and to which the display 7 mounted.

The carrier is integrally moulded in a white translucent plastics polycarbonate material, sold by GE Plastics under the trade mark Lexan 123R.

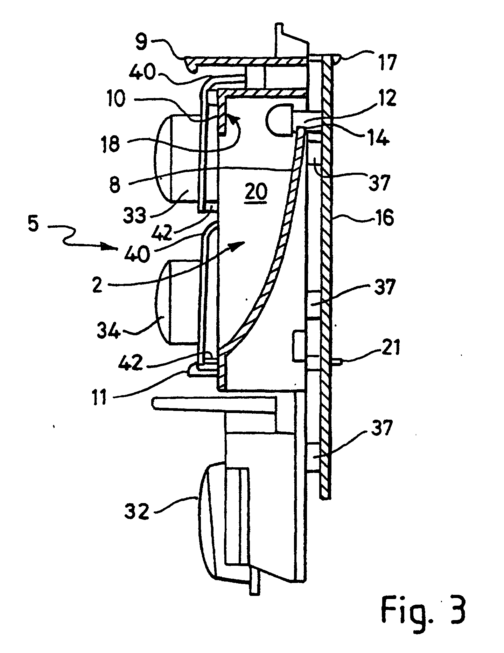

With reference now also to Figure 3, the display portion 2 has a rectangular and concave backlight area 8 for back illuminating the display 7, disposed generally behind and below a pelmet 10 that extends across the upper edge of the display portion. Six blue-green light emitting diodes (LEDs) 12 are equally spaced behind the length of the pelmet 10, along a top edge 14 of the backlight area 8. Each LED 12 is mounted on a single circuit board 16 that is clipped by clips 17,19 and a locating stud 21 to the back of the carrier 5, with each display LED 12 resting in a shallow locating feature 60 on the backlight area top edge 14.

The light from the LEDs 12 is therefore directed generally downwards onto the backlight area 8, either directly or by scattering from the surfaces 18 inside the pelmet 10. The uppermost part of the backlight area 8 is essentially perpendicular to the axis of the LEDs 12, and farther away from the LEDs curves forwards towards the front of the carrier 5. The curve is in the plane of Figure 2 and has a parabolic shape so that areas further from the LEDs 12 receive more incident light than would otherwise be the case. This helps to provide a more even back illumination of the display 7. At the sides of the backlight area, the display portion has end portions 20,22 that scatter incident light back towards the backlight area 8 and the display 7, so improving the evenness of the illumination.

The button portions 4,6 are formed from the same translucent polycarbonate material, but will in general, have front surfaces which have been partially covered in an opaque coating (not shown), so that each integrally moulded button 30-36 may display information regarding the function of the button when backlighted through the uncoated portions by button illumination LEDs 37 mounted on the circuit board 16.

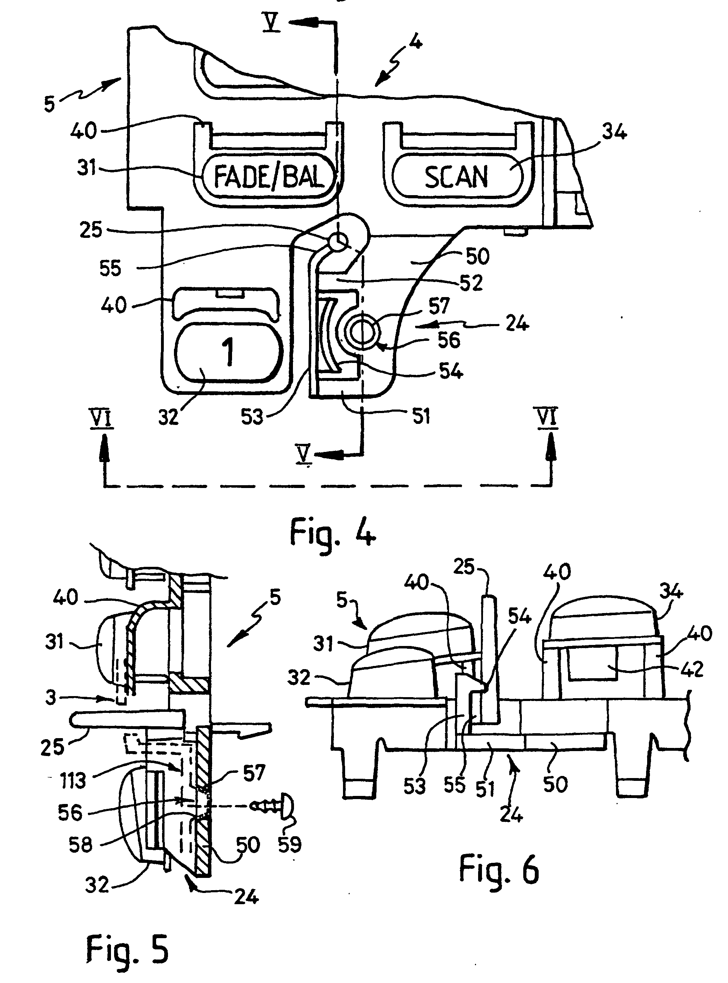

Each button 30-36 has a convex shape that projects forwards through an aperture in the bezel fixed portion 3, and is linked to the rest of the carrier 5 by a flexible linkage 40 that extends generally perpendicularly with respect to the plane of the carrier 5, and allows the button to rotate about an axis that is generally in the plane of the carrier. The flexible linkage in the present example is a pair of hinges 40 integrally moulded with each of the buttons 30-36, and connecting opposite upper corners of a button with the rest of the carrier 5. When a user pushes one of the buttons 30-36 from its rest position, the lower portion of the button rotates inwards so that an inwardly directly finger 42 in the middle lower portion of the button can make contact with an electrical contact (not shown) on the circuit board 16. (For clarity, circuit board 16 is omitted from Figures 4, 5 and 6.)

Figures 4 and 6 show respectively an enlarged plan and bottom view of the carrier 5 and integrally moulded latch mechanism 24. The latch mechanism 24 is connected to a supporting portion 50 about 2 mm thick and is an extension of the main body of the carrier 5. The latch supporting portion leads into a pair of parallel and relatively flexible arms 51,52 about 1 mm thick and that therefore have a cross sectional area considerably less than that of the adjoining supporting portion 50.

The arms terminate at a linking portion 53 that is mostly planar and perpendicular to the plane of the arms. The end of each arm 51,52 is integral with the linking portion 53, so that this forms a bridge across the arms 51,52. Like the supporting portion, the linking portion 53 is again relatively inflexible, being about 2 mm thick. The flexing of the arms 51,52 is therefore relatively constrained, such that the ends of the arms (and hence the linking portion 53) will tend to flex in unison and about an axis through and perpendicular to the arms near the junction between the arms 51,52 and the supporting portion 50.

An arcuate claw-shaped detent 54 protrudes perpendicularly from the linking portion 53, in a direction generally parallel to an opposed to that of the arms 51,52, so that as the arms flex, so will the detent 54. The linking portion 53 therefore acts as a detent mount, and the detent acts as a latching engagement feature.

As can be seen in Figure 1, the demountable bezel 213 has a retention feature 49 with an arcuate shape to match the claw.

The linking portion 53 has on one side a lateral extension 55. The lever arm 25 is integral with the end of the lateral extension 55, and extends in a direction perpendicularly away from the plane defined by the pair of flexible arms 51,52 and towards and through the small hole 26 in the front of the bezel fixed portion 3.

In the illustrated embodiment, the lateral extension 55 has a slight bend away from the plane of the linking portion 53, however this has no significant effect on the operation of the latching mechanism 24.

Because the lever arm 25 is to one side of the linking portion 53, the flexible arm 52 closest the lever arm 25 will tend to move somewhat more than the other flexible arm 51 when the lever arm 25 is manually operated, and so the movement of the detent 54 is not entirely symmetric. However, the dimensions of the detent 54 and matching arcuate retention feature 49 are chosen to accommodate this lack of uniformity and so this has no deleterious effect upon the operation of the latching mechanism 24.

When the lever arm is moved to the left as drawn in Figures 1 and 4, the detent 54 is retracted from the retention feature 49, allowing the demountable bezel 213 to be removed from the recess 113. Similarly, when the demountable bezel 213 is press fitted to the recess 113, the insertion force will move the detent 54 and hence the lever arm 25 to the left whereupon the detent 54 can snap into engagement with the arcuate-shaped retention feature 49 on the demountable bezel portion 213.

The engagement between the detent 54 and the retention feature is positive on account of biasing forces provided by four demountable bezel ejection springs 48 integrally moulded in the floor of the recess 113, and a consequent slight backward stressing of the flexible arms 51,52.

The alignment between the latching mechanism 24 and bezel fixed portion 3, and particularly the bezel recess 113 and small hole 26, can best be seen in Figure 5 where the bezel fixed portion 3 is illustrated in dashed outline.

The latch mechanism supporting portion 50 has an alignment hole 56 with conically tapering sides 57. This alignment hole 56 is juxtaposed opposite a conical stud 58 on inner surface of the bezel fixed portion 3, the stud 58 having similarly tapering sides. When the carrier 5 and bezel fixed portion 3 are brought together during manufacture of the bezel assembly 1, the carrier 5 and bezel fixed portion are located automatically by the matching tapering sides of the stud 58 and hole 56. The carrier 5 and bezel fixed portion 3 are then secured together at this point by a screw 59 inserted into a self tapping hole (not shown) along the axis of the stud. The head of the screw 59 then comes into contact with the area around the alignment hole 56 to press the matching conical surfaces together.

In order to improve the relative location of the latching mechanism 24 with respect to the recess 113 and small hole 26, the alignment hole 56 is provided in the relatively rigid supporting portion 50 symmetrically between the flexible arms 51,52 and as close as possible to the axis about which the detent 54 and lever arm 25 rotate when the latching mechanism 24 is manually activated.

The button carrier described in detail above may be adapted for use with any other type of electronic apparatus having a demountable bezel portion and in which at least one button and/or display are required. The use of a single integrally moulded carrier and latch mechanism with the mechanical properties to allow the demountable bezel to be releasably secured in the recess of the fixed bezel portion, simplifies the manufacture of the carrier and bezel assembly. Particularly in components destined for high volume production, such as a cassette radio for a motor vehicle, even a small cost reduction in each component can amount to a significant total saving.

## Claims

1. A bezel assembly (1) comprising a bezel and a button and/or display carrier (5), the bezel having a fixed portion (3) and a demountable portion (213), the carrier (5) being affixed to the fixed bezel portion (3), and the fixed bezel portion (3) having a recess (113) in a front face thereof in which the demountable bezel portion (213) may be releasably secured, in which the carrier (5) has a latch mechanism (24) by which the demountable bezel portion (213) is releasably secured within the recess (113), **characterised in that** the latch mechanism (24) is of unitary construction with the carrier (5).

2. A bezel assembly (1) as claimed in Claim 1, in which the latch mechanism (24) has a latching engagement feature (54) by which the demountable bezel portion (213) is releasably secured within the recess (113), and a flexure means (51,52) by which the engagement feature (54) may be moved to release the demountable bezel portion (213).

3. A bezel assembly (1) as claimed in Claim 2, in which the flexure means (51,52) biases the engagement feature (54) into positive engagement with the demountable bezel portion (213) when the demountable bezel portion is secured within the recess (113).

4. A bezel assembly (1) as claimed in Claim 2 or Claim 3, in which the latch mechanism (24) has a lever arm (25) which extends through the fixed bezel portion (3) which arm (25) when manually moved moves the flexure means (51,52) to release the demountable bezel portion (213).

5. A bezel assembly (1) as claimed in any one of Claims 2 to 4, in which the flexure means comprises one or more flexible arms (51,52) extending from a relatively inflexible body portion (50) of the carrier (5).

6. A bezel assembly (1) as claimed in Claim 5, in which the engagement feature is a detent (54) that engages with a matching part (49) of the demountable bezel portion (213) to secure the demountable bezel portion within the recess (113).

7. A bezel assembly (1) as claimed in Claim 6, in which the latch mechanism (24) includes a detent mount (53) extending generally at right angles from the ends of the arms (51,52), the detent (54) then extending from the mount in a direction generally parallel to the pair of arms (51,52).

8. A bezel assembly (1) as claimed in Claim 7, in which the mount (53) is relatively inflexible compared with the arms (51,52).

9. A bezel assembly (1) as claimed in Claim 7 or 8, in which the lever arm (25) extends from the mount (53) and through the fixed bezel portion (3).

10. A bezel assembly (1) as claimed in any one of Claims 5 to 9, in which the carrier body portion (50) has a first locating feature (56) that locates with a matching second locating feature (58) on the fixed bezel portion (3) in order to locate the latching mechanism (24) with respect to the fixed bezel portion (3) when the carrier (5) is affixed thereto.

11. A bezel assembly (1) as claimed in Claim 10, in which the first locating feature (56) is on a part of the carrier body portion (50) proximate the latching mechanism (24).

12. A bezel assembly (1) as claimed in Claim 11, in which the first locating feature (56) is on a part of the carrier body portion (50) centered between two of the flexible arms (51,52).

13. A bezel assembly (1) as claimed in any one of Claims 10 to 12, in which the first locating feature is a hole (56) in the carrier body portion (50), the hole having a tapering inner surface (57), and in which the second locating feature is a projection (58) that fits into the hole (56) and that has a matching taper.

14. A bezel assembly as claimed in Claim 13, in which the first location feature (56) and second location feature (58) are held together by a screw (59) that screws into the projection (58).

15. An electronic device comprising a bezel assembly (1) as claimed in any preceding claim.

## Patentansprüche

1. Frontblendeneinheit (1) mit einer Frontblende und einem Tasten- und/oder Anzeigefeldträger (5), welche Frontblende einen festen Teil (3) und einen abnehmbaren Teil (213) aufweist, wobei der Träger (5) am festen Frontblendenteil (3) befestigt ist, und worin der feste Frontblendenteil (3) eine Aussparung (113) in einer Frontblendenfläche desselben aufweist, in welcher der abnehmbare Frontblendenteil (213) lösbar befestigt werden kann, worin der Träger (5) einen Verrastmechanismus (24) aufweist, durch den der abnehmbare Frontblendenteil (213) lösbar in der Aussparung (113) fixiert ist,
**dadurch gekennzeichnet, daß** der Verrastmechanismus (24) einteilig mit dem Träger (5) ausgebildet ist.

2. Frontblendeneinheit (1) nach Anspruch 1, worin der Verrastmechanismus (24) eine Rasteingriffsform (54) aufweist, über welche der abnehmbare Frontblendenteil (213) lösbar innerhalb der Aussparung (113) fixiert ist, und flexible Mittel (51, 52), über welche die Rasteingriffsform (54) so verstellt werden kann, daß sie den lösbaren Frontblendenteil (213) freigibt.

3. Frontblendeneinheit (1) nach Anspruch 2, in welcher die flexiblen Mittel (51, 52) die Rasteingriffsform (54) in formschlüssigen Eingriff mit dem abnehmbaren Frontblendenteil (213) vorspannen, wenn der abnehmbare Frontblendenteil in der Aussparung (113) fixiert ist.

4. Frontblendeneinheit (1) nach Anspruch 2 oder Anspruch 3, worin der Verrastmechanismus (24) einen Hebelarm (25) aufweist, der durch den festen Frontblendenteil (3) reicht, welcher Hebelarm (25) bei Betätigung von Hand die flexiblen Mittel (51, 52) so bewegt, daß sie den abnehmbaren Frontblendenteil (213) freigeben.

5. Frontblendeneinheit (1) nach einem beliebigen der Ansprüche 2 bis 4, in welchem die flexiblen Mittel einen oder mehrere flexible Arme (51, 52) aufweisen, die von einem relativ unelastischen Rumpfabschnitt (50) des Trägers (5) abstehen.

6. Frontblendeneinheit (1) nach Anspruch 5, worin die Eingriffsform eine Halteklinke (54) ist, welche in ein passendes Gegenstück (49) des abnehmbaren Frontblendenteiles (213) eingreift, so daß der abnehmbare Frontblendenteil innerhalb der Aussparung (113) fixiert wird.

7. Frontblendeneinheit (1) nach Anspruch 6, in welcher der Verrastmechanismus (24) einen Klinkenträger (53) aufweist, der allgemein rechtwinklig von den Enden der Arme (51, 52) absteht, wobei dann die Halteklinke (54) in einer zu dem Armpaar (51, 52) im wesentlichen parallelen Richtung von dem Träger absteht.

8. Frontblendeneinheit (1) nach Anspruch 7, worin der Träger (53) im Vergleich zu den Armen (51, 52) relativ unelastisch ist.

9. Frontblendeneinheit (1) nach Anspruch 7 oder 8, in welcher der Hebelarm (25) von dem Träger (53) absteht und durch den festen Frontblendenteil (3) reicht.

10. Frontblendeneinheit (1) nach einem beliebigen der Ansprüche 5 bis 9, in welcher der Trägerrumpfabschnitt (50) eine erste Zentrierform (56) aufweist, die an einer passenden zweiten Zentrierform (58) am festen Frontblendenteil (3) zentriert wird, so daß der Verrastmechanismus (24) gegenüber dem festen Frontblendenteil (3) zentriert wird, wenn der Träger (5) daran befestigt wird.

11. Frontblendeneinheit (1) nach Anspruch 10, in welcher sich die erste Zentrierform (56) auf einem Teil des Trägerrumpfabschnittes (50) in der Nähe des Verrastmechanismus (24) befindet.

12. Frontblendeneinheit (1) nach Anspruch 11, worin sich die erste Zentrierform (56) auf einem Teil des Trägerrumpfabschnittes (50) befindet, der mittig zwischen zwei der flexiblen Arme (51, 52) liegt.

13. Frontblendeneinheit (1) nach einem beliebigen der Ansprüche 10 bis 12, worin die erste Zentrierform eine Bohrung (56) im Trägerrumpfabschnitt (50) ist, wobei die Bohrung eine kegelig zulaufende Innenfläche (57) hat, und worin die zweite Zentrierform ein Vorsprung (58) ist, der sich passend in die Bohrung (56) einfügt und einen passenden Konus aufweist.

14. Frontblendeneinheit nach Anspruch 13, in welcher die erste Zentnerform (56) und die zweite Zentrierform (58) von einer Schraube (59) zusammengehalten werden, die in den Vorsprung (58) eingeschraubt wird.

15. Elektronische Vorrichtung mit einer Frontblendeneinheit (1) nach einem beliebigen der vorangehenden Ansprüche.

## Revendications

1. Ensemble d'encadrement (1) comprenant un encadrement et un support de bouton et/ou d'affichage (5), l'encadrement comportant une partie fixe (3) et une partie démontable (213), le support (5) étant fixé à la partie d'encadrement fixe (3), et la partie d'encadrement fixe (3) comportant un évidement (113) sur une face avant de celle-ci dans lequel la partie d'encadrement démontable (213) peut être fixée de façon amovible, dans lequel le support (5) comporte un mécanisme de verrouillage (24) grâce auquel la partie d'encadrement démontable (213) est fixée de façon amovible à l'intérieur de l'évidement (113), **caractérisé en ce que** le mécanisme de verrouillage (24) forme une construction unitaire avec le support (5).

2. Ensemble d'encadrement (1) selon la revendication 1, dans lequel le mécanisme de verrouillage (24) comporte un élément de mise en prise de verrouillage (54) par lequel la partie d'encadrement démontable (213) est fixée de façon amovible à l'intérieur de l'alignement (113), et un moyen de flexion (51, 52) grâce auquel l'élément de mise en prise (54) peut être déplacé pour libérer la partie d'encadrement démontable (213).

3. Ensemble d'encadrement (1) selon la revendication 2, dans lequel 1e moyen de flexion (51, 52) sollicite l'élément de mise en prise (54) en prise avec la partie d'encadrement démontable (213) lorsque la partie d'encadrement démontable est fixée à l'intérieur de l'évidement (113).

4. Ensemble d'encadrement (1) selon la revendication 2 ou la revendication 3, dans lequel le mécanisme de verrouillage (24) comporte un bras de levier (25) qui s'étend à travers la partie d'encadrement fixe (3), lequel bras (25) lorsqu'il est déplacé manuellement déplace de moyen de flexion (51, 52) afin de libérer la partie d'encadrement démontable (213).

5. Ensemble d'encadrement (1) selon l'une quelconque des revendications 2 à 4, dans lequel le moyen de flexion comprend un ou plusieurs bras flexibles (51, 52) s'étendant à partir d'une partie de corps relativement rigide (50) du support (5).

6. Ensemble d'encadrement (1) selon la revendication 5, dans lequel l'élément de mise en prise est un cliquet (54) qui se met en prise avec une partie correspondante (49) de la partie d'encadrement démontable (213) afin de fixer la partie d'encadrement démontable à l'intérieur de l'évidement (113).

7. Ensemble d'encadrement (1) selon la revendication 6, dans lequel le mécanisme de verrouillage (24) comprend support de cliquet (53) s'étendant sensiblement à angle droit depuis les extrémités des bras (51, 52), le cliquet (54) s'étendant alors depuis le support dans une direction sensiblement parallèle à la paire de bras (51, 52).

8. Ensemble d'encadrement (1) selon la revendication 7, dans lequel le support (53) est relativement rigide par comparaison aux bras (51, 52).

9. Ensemble d'encadrement (1) selon la revendication 7 ou 8, dans lequel le bras de levier (25) s'étend depuis le support (53) et à travers la partie d'encadrement fixe (3).

10. Ensemble d'encadrement (1) selon l'une quelconque des revendications 5 à 9, dans lequel la partie de corps de support (50) comporte un premier élément de positionnement (56) qui se situe avec un second élément de positionnement correspondant (58) sur la partie d'encadrement fixe (3) de manière à positionner le mécanisme de verrouillage (24) par rapport à la partie d'encadrement fixe (3) lorsque le support (5) est fixé à celle-ci.

11. Ensemble d'encadrement (1) selon la revendication 10, dans lequel le premier moyen de positionnement (56) se trouve sur une partie de la partie de corps de support (50) à proximité du mécanisme de verrouillage (24).

12. Ensemble d'encadrement (1) selon la revendication 11, dans lequel le premier élément de positionnement (56) se trouve sur une partie de la partie de corps de support (50) centrée entre deux des bras flexibles (51,52).

13. Ensemble d'encadrement (1) selon l'une quelconque des revendications 10 à 12, dans lequel le premier élément de positionnement est un trou (56) dans la partie de corps de support (50), le trou comportant une surface interne conique (57), et dans lequel le second élément de positionnement est une saillie (58) qui s'adapte dans le trou (56) et qui présente une conicité correspondante.

14. Ensemble d'encadrement selon la revendication 13, dans lequel le premier élément de positionnement (56) et le second élément de positionnement (58) sont maintenus ensemble par une vis (59) qui se fixe dans la saillie (58).

15. Dispositif électronique comprenant un ensemble d'encadrement (1) selon l'une quelconque des revendications précédentes.
